# EUROPEAN PATENT SPECIFICATION

(11) **EP 4 191 187 B1**
(45) Date of publication and mention of the grant of the patent: **22.04.2026**
(21) Application number: 21875468.7
(22) Date of filing: 27.09.2021
(51) Int. Cl.: F28D 9/00, F28F 3/00, F28F 3/08, F28F 13/18, F28F 21/00, F24F 7/08

(54) **PARTITIONING MEMBER FOR TOTAL HEAT EXCHANGE ELEMENTS, TOTAL HEAT EXCHANGE ELEMENT, AND VENTILATION APPARATUS**
TRENNELEMENT FÜR GESAMTWÄRMETAUSCHERELEMENTE, GESAMTWÄRMETAUSCHERELEMENT UND BELÜFTUNGSVORRICHTUNG
ORGANE DE SÉPARATION POUR ÉLÉMENTS D'ÉCHANGE DE CHALEUR TOTALE, ÉLÉMENT D'ÉCHANGE DE CHALEUR TOTALE ET APPAREIL DE VENTILATION

(30) Priority: 30.09.2020 JP 2020164299
(43) Date of publication of application: 07.06.2023
(73) Proprietor: Daikin Industries, Ltd., Osaka-shi, Osaka 530-0001 (JP); Daicel Corporation, Osaka 530-0011 (JP)
(72) Inventor: NAKAZAWA Takema, Osaka-shi, Osaka 530-8323 (JP); KASAI Masaya, Osaka-shi, Osaka 530-8323 (JP); NISHIO Naotaka, Tokyo 108-8230 (JP); MAETANI Shinji, Tokyo 108-8230 (JP)
(74) Representative: Hoffmann Eitle
(86) International application number: PCT/JP2021/035225
(87) International publication number: WO 2022/071166

(56) References cited:
- EP-B1- 2 119 996
- WO-A1-2015/050105
- WO-A1-2015/111610
- WO-A1-2018/131719
- WO-A1-2020/194461
- WO-A1-2021/033658
- JP-A- 2016 029 226
- JP-A- 2017 179 613
- JP-B2- 5 230 821
- JP-B2- 6 636 217
- US-B2- 9 255 744
- US-B2- 9 429 366

## Description

### TECHNICAL FIELD

The present invention relates to a partitioning member for a total heat exchange element, a total heat exchange element including the partitioning member, and a ventilation device including the total heat exchange element.

### BACKGROUND ART

As disclosed in JP 2011-163650 A, a ventilation device including a heat exchange element has been known. The heat exchange element exchanges heat between supply air and exhaust air.

In the heat exchange element, flat plate-shaped partitioning members and corrugated plate-shaped spacing members are alternately stacked. The partitioning member and the spacing member are bonded to each other with an adhesive. In the heat exchange element of JP 2011-163650 A, growth of bacteria and fungi in the heat exchange element is reduced by use of the adhesive containing an antibacterial/antifungal component.

Further prior art is as follows: US 9,255,744 B2 is directed to a water transport membrane; EP 2 119 996 B1 describes an aluminum fin material for a heat exchanger; US 9,429,366 B2 relates to a laminate membrane for a core in an energy recovery system; WO 2015/050105 A1 is directed to a single-sided corrugated board; JP 6 636217 B2 describes a total heat exchange element having a partition plate; JP 5 230821 B2 relates to a total heat exchanger which distributes two types of air flow through partition plates; JP 2017 179613 A is directed to a moisture permeable sheet having a fiber substrate; JP 2016 029226 A describes a base paper for a total heat exchanger element.

### SUMMARY OF THE INVENTION

### TECHNICAL PROBLEM

In the heat exchange element of JP 2011-163650 A, the adhesive containing the antibacterial/antifungal component is provided at a portion where the flat plate-shaped partitioning member and the corrugated plate-shaped spacing member contact each other. Thus, growth of bacteria and fungi cannot be reduced at portions of the partitioning member and the spacing member not in contact with the adhesive.

It is an object of the present invention to keep the partitioning member for the total heat exchange element clean.

### SOLUTION TO THE PROBLEMS

The present invention is defined by the features of the independent claims. Optional features are described in the dependent claims.

A first aspect of the present invention is directed to a partitioning member (40) for a total heat exchange element. The partitioning member (40) includes a sheet-shaped porous base (41), a moisture permeable membrane (42) provided on the porous base (41), and a functional material (46) producing at least one of an antifungal effect, an antibacterial effect, or an antiviral effect, the moisture permeable membrane (42) containing the functional material (46).

In the first aspect, the moisture permeable membrane (42) containing the functional material (46) is provided on the sheet-shaped porous base (41). Thus, the partitioning member (40) for the total heat exchange element can be kept clean.

In the first aspect, the moisture permeable membrane (42) is provided so as to cover a surface of the porous base (41), and the surface of the porous base (41) covered with the moisture permeable membrane (42) is subjected to hydrophilic treatment.

In the first aspect, the porous base (41) is subjected to the hydrophilic treatment. Thus, a process of forming the moisture permeable membrane (42) on the surface of the porous base (41) is facilitated.

A second aspect of the present invention is an embodiment of the first aspect. In the second aspect, the functional material (46) is smaller than a thickness of the moisture permeable membrane (42).

In the second aspect, the functional material (46) smaller than the thickness of the moisture permeable membrane (42) is provided in the moisture permeable membrane (42). Thus, even if the functional material (46) drops from the moisture permeable membrane (42) for some reason, air flowing in a flow path partitioned by the partitioning member (40) for the total heat exchange element does not pass through the moisture permeable membrane (42).

A third aspect of the present invention is directed to a partitioning member (40) for a total heat exchange element. The partitioning member (40) includes a sheet-shaped porous base (41), a moisture permeable membrane (42) provided on the porous base (41), and a functional membrane (45) containing a functional material (46) producing at least one of an antifungal effect, an antibacterial effect, or an antiviral effect and covering a surface of the porous base (41) or the moisture permeable membrane (42).

In the third aspect, the functional membrane (45) containing the functional material (46) is provided for the partitioning member (40) for the total heat exchange element. Thus, the partitioning member (40) for the total heat exchange element can be kept clean.

In the third aspect, the moisture permeable membrane (42) is provided so as to cover a surface of the porous base (41), and the surface of the porous base (41) covered with the moisture permeable membrane (42) is subjected to hydrophilic treatment.

In the third aspect, the porous base (41) is subjected to the hydrophilic treatment. Thus, a process of forming the moisture permeable membrane (42) on the surface of the porous base (41) is facilitated.

A fourth aspect of the present invention is an embodiment of the third aspect. In the fourth aspect, the functional membrane (45) is thinner than the moisture permeable membrane (42).

In the fourth aspect, the functional membrane (45) is thinner than the moisture permeable membrane (42). Thus, a decrease in the heat exchange amount due to the provision of the functional membrane (45) in the partitioning member (40) for the total heat exchange element is reduced.

A fifth aspect of the present invention is an embodiment of any one of the first to fourth aspects. In the fifth aspect, the functional material (46) is a substance containing pyrithione in a molecular structure.

In the fifth aspect, the substance containing pyrithione in its molecular structure is provided as the functional material (46) in the partitioning member (40) for the total heat exchange element.

A sixth aspect of the present invention is directed to a total heat exchange element (30). The total heat exchange element (30) includes a plurality of partitioning members (40) of any one of the first to fifth aspects, and a spacing member (32, 125, 155) arranged between adjacent ones of the partitioning members (40) stacked, the spacing member (32, 125, 155) keeping a distance between the adjacent partitioning members (40), a first air flow path (36, 121) and a second air flow path (37, 151) being alternately provided with an associated one of the partitioning members (40) interposed therebetween.

In the sixth aspect, the total heat exchange element (30) includes a plurality of partitioning members (40) of any one of the first to fifth aspects.

An seventh aspect of the present invention is directed to a ventilation device (10). The ventilation device (10) includes the total heat exchange element (30) of the sixth aspect. Supply air to be supplied from an outdoor space to an indoor space flows in the first air flow path (36, 121) of the total heat exchange element (30), and exhaust air to be discharged from the indoor space to the outdoor space flows in the second air flow path (37, 151) of the total heat exchange element (30).

In the seventh aspect, the ventilation device (10) includes the total heat exchange element (30) of the sixth aspect.

### BRIEF DESCRIPTION OF THE DRAWINGS

FIG. 1 is a schematic cross-sectional view of a partitioning member for a total heat exchange element according to a first embodiment.
FIG. 2 is a schematic perspective view of a total heat exchange element of a second embodiment.
FIG. 3 is a cross-sectional view of an essential portion of the total heat exchange element of the second embodiment.
FIG. 4 is a schematic configuration diagram of a ventilation device of a third embodiment.
FIG. 5 is a perspective view of a total heat exchange element of a fourth embodiment.
FIG. 6 is a plan view of the total heat exchange element of the fourth embodiment.
FIG. 7 is a plan view of the total heat exchange element of the fourth embodiment, part of which is extracted.
FIG. 8 is a perspective view of a cross section taken along line VIII-VIII in FIG. 7 and its periphery.
FIG. 9 is a schematic cross-sectional view of a partitioning member for a total heat exchange element according to a first variation of another embodiment.
FIG. 10 is a schematic cross-sectional view of the partitioning member for the total heat exchange element according to the first variation of another embodiment.
FIG. 11 is a schematic cross-sectional view of the partitioning member for the total heat exchange element according to the first variation of another embodiment.
FIG. 12 is a schematic cross-sectional view of the partitioning member for the total heat exchange element according to the first variation of another embodiment.
FIG. 13 is a schematic cross-sectional view of a partitioning member for a total heat exchange element according to a second variation of another embodiment.
FIG. 14 is a schematic cross-sectional view of the partitioning member for the total heat exchange element according to the second variation of another embodiment.
FIG. 15 is a schematic cross-sectional view of the partitioning member for the total heat exchange element according to the second variation of another embodiment.
FIG. 16 is a cross-sectional view of a total heat exchange element of a third variation of another embodiment, which corresponds to FIG. 3.
FIG. 17 is a cross-sectional view of a total heat exchange element of a fourth variation of another embodiment, which corresponds to FIG. 3.

### DESCRIPTION OF EMBODIMENT

### «First Embodiment»

A first embodiment will be described. This embodiment relates to a partitioning member (40) for a total heat exchange element.

The partitioning member (40) for the total heat exchange element according to this embodiment forms a total heat exchange element (30) provided for a ventilation device (10). The partitioning member (40) for the total heat exchange element according to this embodiment is a member for causing exchange of sensible heat and latent heat (moisture) between supply air and exhaust air. Hereinafter, the "partitioning member for the total heat exchange element" will be simply referred to as a "partitioning member."

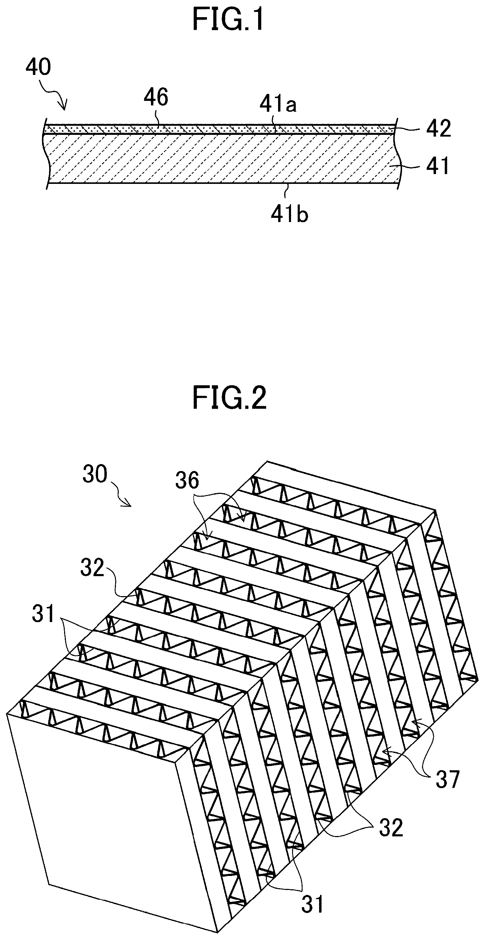

As shown in FIG. 1, the partitioning member (40) of this embodiment includes a sheet-shaped porous base (41) and a moisture permeable membrane (42) provided on the porous base (41). In the partitioning member (40) of this embodiment, the moisture permeable membrane (42) is provided to cover a first surface (41a) of the porous base (41), which is one of surfaces of the porous base (41).

### -Porous Base-

The porous base (41) is a porous sheet-shaped member made of polyolefin-based resin, for example. The porous base (41) may be non-woven fabric made of fibrous resin. The porous base (41) has a thickness of 10 µm, for example. Preferably, the porous base (41) is an element that serves as a support for the moisture permeable membrane (42), and has high moisture permeability.

The first surface (41a), i.e., one of the surfaces of the porous base (41), is subjected to hydrophilic treatment. Examples of the hydrophilic treatment include corona discharge treatment and plasma treatment. The hydrophilic treatment allows generation of a carboxy group, a hydroxy group, or a carbonyl group on the first surface (41a) of the porous base (41).

### -Moisture Permeable Membrane-

The moisture permeable membrane (42) is a coating covering the entirety of the first surface (41a) of the porous base (41). The moisture permeable membrane (42) is made of a polymer having moisture permeability. The polymer forming the moisture permeable membrane (42) is copolymer having a first constitutional unit and a second constitutional unit. The moisture permeable membrane (42) has a thickness of 1 µm, for example. The thickness of the moisture permeable membrane (42) is not particularly limited, and is preferably 0.05 µm to 1 µm and more preferably 0.1 µm to 0.5 µm. In a case where the thickness of the moisture permeable membrane (42) is 0.05 µm or more, favorable film formability is exhibited, leading to improvement in gas barrier properties. In a case where the above-described thickness is 1 µm or less, more favorable moisture permeability is exhibited.

Examples of monomer forming the first constitutional unit may include 2-methacryloyloxyethyl phosphorylcholine. Examples of monomer forming the second constitutional unit may include (meth)acrylic acid alkyl ester having an alkyl group with a carbon number of 2 or more in an ester moiety, such as (meth)acrylic acid stearyl. In the copolymer forming the moisture permeable membrane (42), the form of copolymer having the first constitutional unit and the second constitutional unit is not particularly limited, and the copolymer forming the moisture permeable membrane (42) may be any of a block copolymer, an alternating copolymer, and a random copolymer.

The moisture permeable membrane (42) contains a functional material (46) producing an antifungal effect and an antibacterial effect. The moisture permeable membrane (42) of this embodiment contains sodium pyrithione (C₅H₄NNaOS) as the functional material (46). Molecules of sodium pyrithione, which is the functional material (46), are dispersed in the moisture permeable membrane (42). Thus, the size (the van der Waals radius in this embodiment) of the functional material (46) contained in the moisture permeable membrane (42) is 5 nm or less and less than the thickness (about 1 µm) of the moisture permeable membrane (42).

A step of forming the moisture permeable membrane (42) on the porous base (41) includes an application step of applying a composition for forming the moisture permeable membrane (42) to the first surface (41a) of the porous base (41) and a drying step of heating a coating formed in the application step and evaporating a solvent. The composition used in the application step is obtained by dissolving or dispersing the above-described copolymer and the functional material (46) in the solvent such as water. The first surface (41a) of the porous base (41), to which surface the composition is applied in the application step, is subjected to the hydrophilic treatment in advance. Thus, the thickness of the coating formed on the first surface (41a) becomes uniform. The moisture permeable membrane (42) with a uniform thickness is formed accordingly.

Sodium pyrithione which is the functional material (46) of this embodiment is dissolvable in water which is the solvent. Thus, sodium pyrithione which is the functional material (46) is dispersed in the moisture permeable membrane (42) formed by applying the composition to the porous base (41), substantially in the form of molecules.

### -Feature (1) of First Embodiment-

In the partitioning member (40) of this embodiment, the moisture permeable membrane (42) covering the entirety of the first surface (41a) of the porous base (41) contains the functional material (46) producing the antifungal effect and the antibacterial effect. Thus, growth of bacteria and fungi can be reduced across the entirety of the partitioning member (40), and the entirety of the partitioning member (40) can be kept clean.

### -Feature (2) of First Embodiment-

In the moisture permeable membrane (42) of the partitioning member (40) of this embodiment, sodium pyrithione which is the functional material (46) is distributed substantially uniformly in the form of molecules. Thus, growth of bacteria and fungi can be reduced across the entirety of the partitioning member (40), and the entirety of the partitioning member (40) can be kept clean.

### -Feature (3) of First Embodiment-

Sodium pyrithione contained as the functional material (46) in the moisture permeable membrane (42) of this embodiment produces a sufficient antifungal effect and a sufficient antibacterial effect even if the concentration of the sodium pyrithione in the moisture permeable membrane (42) is about 4 ppm.

For example, in order for "4,4'-(2-ethyl-2-nitropropane-1,3-diyl)bismorpholine" or "silver (Ag)" to produce the sufficient antifungal effect and the sufficient antibacterial effect, the concentration of the substances in the moisture permeable membrane (42) needs to be set to about 500 ppm. From this, it can be understood that sodium pyrithione produces the antifungal effect and the antibacterial effect at a relatively low concentration.

Thus, according to this embodiment, the concentration of the functional material (46) in the moisture permeable membrane (42) can be reduced to a low concentration, which allows the moisture permeable membrane (42) to contain the functional material (46) producing the antifungal effect and the antibacterial effect without deterioration of the moisture permeability of the moisture permeable membrane (42).

Further, a substance having pyrithione in its molecular structure, such as sodium pyrithione, has a property of not causing deterioration of the copolymer forming the moisture permeable membrane (42). Thus, according to this embodiment, sodium pyrithione is used as the functional material (46), thereby making it possible to cause the moisture permeable membrane (42) to contain the functional material (46) producing the antifungal effect and the antibacterial effect without deterioration of durability of the moisture permeable membrane (42).

### -Feature (4) of First Embodiment-

Here, in a case where the functional material (46) is contained in the form of particles (solid) in the moisture permeable membrane (42), the functional material (46) may drop from the moisture permeable membrane (42). If the functional material (46) drops from the moisture permeable membrane (42), a void is formed at a portion where the functional material (46) is used to be present. For this reason, if the functional material (46) whose particle size is greater than the thickness of the moisture permeable membrane (42) drops from the moisture permeable membrane (42), voids penetrating the moisture permeable membrane (42) in the thickness direction are formed in the moisture permeable membrane (42). If such voids are formed in the moisture permeable membrane (42), air flowing on both sides of the partitioning member (40) is mixed through the voids in the moisture permeable membrane (42), resulting in a deterioration of the hermeticity of the partitioning member (40).

On the other hand, in the moisture permeable membrane (42) of the partitioning member (40) of this embodiment, sodium pyrithione which is the functional material (46) is present in the form of molecules in the moisture permeable membrane (42). Thus, the functional material (46) will not drop from the moisture permeable membrane (42) of this embodiment. Consequently, according to this embodiment, the hermeticity of the partitioning member (40) can be kept for a relatively long period of time.

### «Second Embodiment»

A second embodiment will be described. This embodiment relates to a total heat exchange element (30) including the partitioning members (40) of the first embodiment.

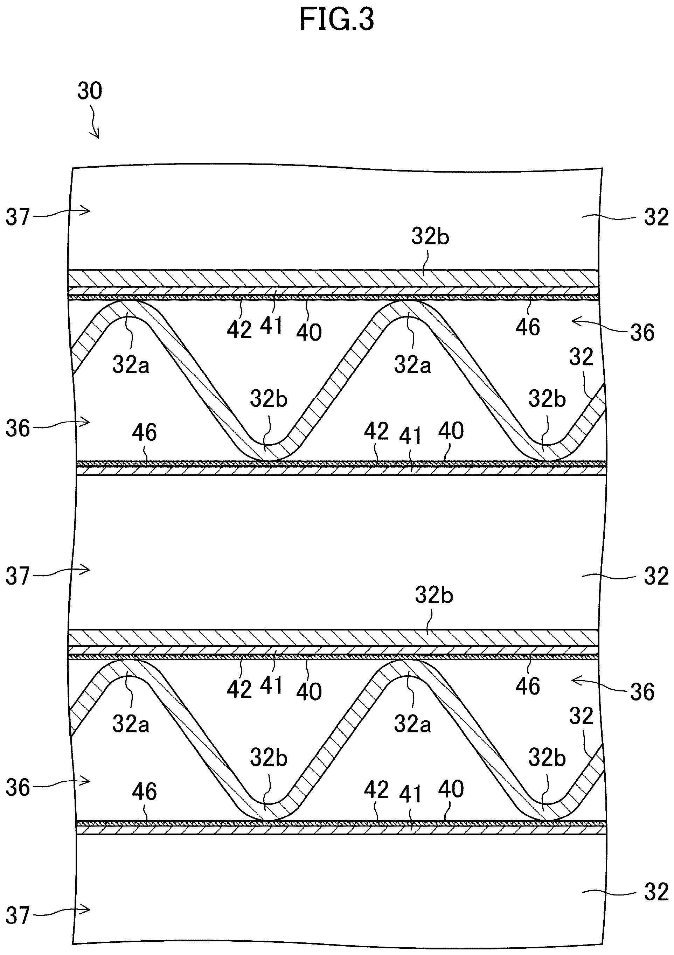

As shown in FIGS. 2 and 3, the total heat exchange element (30) is a cross-flow heat exchanger having a plurality of first air flow paths (36) and a plurality of second air flow paths (37). The total heat exchange element (30) includes the plurality of partitioning members (40) and a plurality of spacing members (32). The total heat exchange element (30) has a quadrangular prism-like shape as a whole.

In the total heat exchange element (30), the partitioning members (40) and the spacing members (32) are stacked alternately. In the total heat exchange element (30), a distance between each adjacent pair of the partitioning members (40) is kept substantially constant by an associated one of the spacing members (32).

In the total heat exchange element (30), the first air flow paths (36) and the second air flow paths (37) are alternately formed in a stacking direction of the partitioning members (40) and the spacing members (32). Each of the partitioning members (40) separates an adjacent pair of the first air flow path (36) and the second air flow path (37) from each other.

The partitioning member (40) forming the total heat exchange element (30) of this embodiment is formed substantially in a square shape in plan view. In the total heat exchange element (30) of this embodiment, the moisture permeable membranes (42) of all the partitioning members (40) face the first air flow paths (36) (see FIG. 3).

The spacing members (32) are configured as corrugated plate-shaped members that are formed substantially in a square shape in plan view. Each of the spacing members (32) has a plurality of ridges (32a) each having a linear ridge line, and a plurality of valleys (32b) each having a linear bottom line. The ridge lines of the ridges (32a) and the bottom lines of the valleys (32b) are substantially parallel to each other. Each of the spacing members (32) has the ridges (32a) and the valleys (32b) alternately formed. Each of the spacing members (32) keeps the distance between the partitioning members (40) arranged on both sides of the spacing member (32).

In the total heat exchange element (30), adjacent ones of the spacing members (32) with an associated one of the partitioning members (40) interposed therebetween are arranged such that the direction of the ridge lines of one of the spacing members (32) are substantially orthogonal to the direction of the ridge lines of the other spacing member (32). This arrangement provides the total heat exchange element (30) with the first air flow paths (36) that open at a pair of opposed side surfaces of the total heat exchange element (30) and the second air flow paths (37) that open at the other pair of opposed side surfaces.

In the total heat exchange element (30), different types of air flow in the first air flow path (36, 121) and the second air flow path (37, 151). For example, in the total heat exchange element (30) provided for a ventilation device, outdoor air (supply air) to be supplied to an indoor space flows in the first air flow path (36, 121), and room air (exhaust air) discharged to an outdoor space flows in the second air flow path (37, 151). The total heat exchange element (30) causes exchange of sensible heat and latent heat (moisture) between the air flowing in the first air flow path (36, 121) and the air flowing in the second air flow path (37, 151).

### -Features of Second Embodiment-

In the total heat exchange element (30) of this embodiment, the functional material (46) producing the antifungal effect and the antibacterial effect is provided across the entirety of a portion, among the surfaces of each partitioning member (40), which faces the first air flow path (36). Thus, growth of bacteria and fungi can be reduced almost across the entirety of the portion, of the partitioning member (40) of the total heat exchange element (30), which is in contact with the supply air. The supply air passing through the total heat exchange element (30) can thus be kept clean.

### «Third Embodiment»

A third embodiment will be described. This embodiment relates to a ventilation device (10) including the total heat exchange element (30) of the second embodiment.

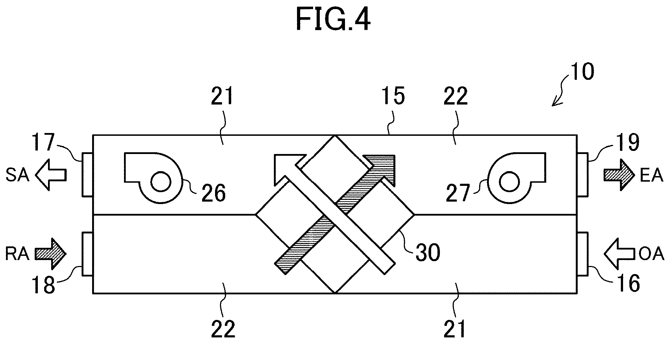

As shown in FIG. 4, the ventilation device (10) includes a casing (15) that houses the total heat exchange element (30). The casing (15) includes an outdoor air inlet (16), an air supply port (17), an indoor air inlet (18), and an exhaust port (19). An air supply passage (21) and an exhaust passage (22) are formed in an internal space of the casing (15). The air supply passage (21) has two ends respectively connected to the outdoor air inlet (16) and the air supply port (17). The exhaust passage (22) has two ends respectively connected to the indoor air inlet (18) and the exhaust port (19).

The total heat exchange element (30) is arranged to cross the air supply passage (21) and the exhaust passage (22). The total heat exchange element (30) is disposed in the casing (15) such that the first air flow paths (36) communicate with the air supply passage (21) and the second air flow paths (37) communicate with the exhaust passage (22).

The ventilation device (10) further includes an air supply fan (26) and an exhaust fan (27). The air supply fan (26) is arranged downstream of the total heat exchange element (30) in the air supply passage (21) (i.e., near the air supply port (17)). The exhaust fan (27) is arranged downstream of the total heat exchange element (30) in the exhaust passage (22) (i.e., near the exhaust port (19)).

In the ventilation device (10), outdoor air flows in the air supply passage (21) toward the indoor space, and room air flows in the exhaust passage (22) toward the outdoor space. The total heat exchange element (30) causes exchange of sensible heat and moisture (latent heat) between the outdoor air flowing in the air supply passage (21) and the room air flowing in the exhaust passage (22).

### -Features of Third Embodiment-

The ventilation device (10) of this embodiment includes the total heat exchange element (30) of the second embodiment. In the total heat exchange element (30) of the second embodiment, growth of bacteria and fungi can be reduced almost across the entirety of the portion, of the partitioning member (40), in contact with the supply air. Thus, according to this embodiment, the supply air to be supplied into the indoor space through the total heat exchange element (30) can be kept clean for a long period of time.

### «Fourth Embodiment»

A fourth embodiment will be described. This embodiment relates to a total heat exchange element (30) including the partitioning members (40) of the first embodiment. Similarly to the total heat exchange element (30) of the second embodiment, the total heat exchange element (30) of this embodiment is provided for the ventilation device (10) of the third embodiment, and causes exchange of sensible heat and latent heat (moisture) between the supply air and the exhaust air.

### -Configuration of Total Heat Exchange Element-

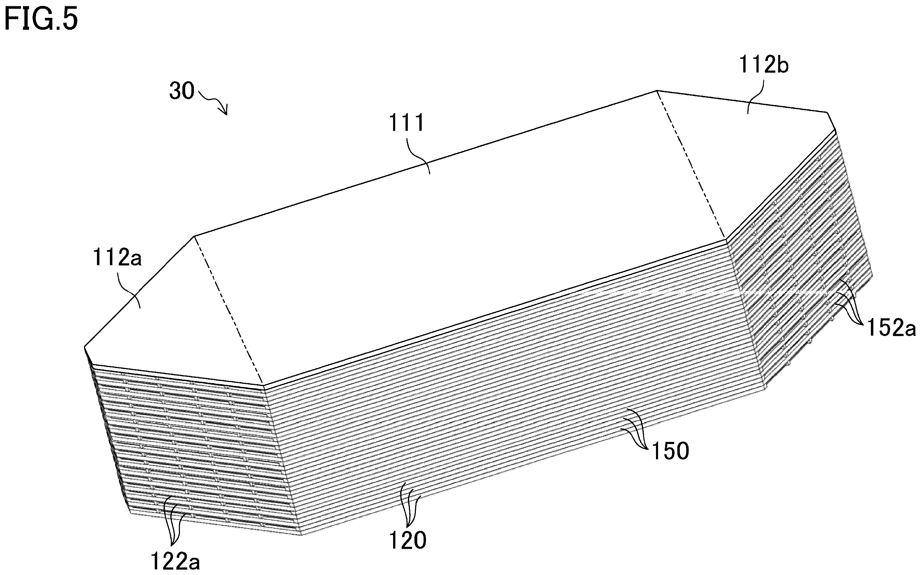

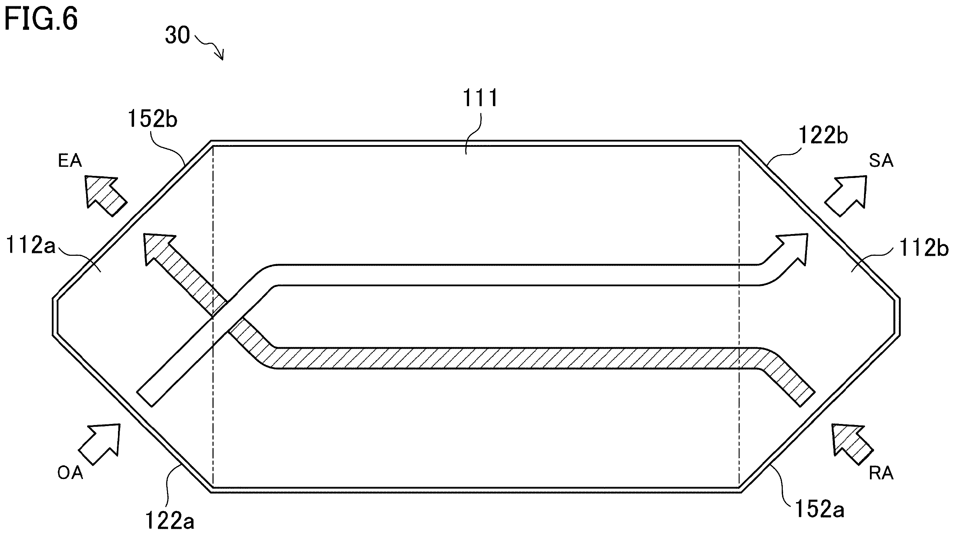

As shown in FIG. 5, the total heat exchange element (30) is formed in a prism shape having polygonal end faces. Each end face of the total heat exchange element (30) of this embodiment has a horizontally oriented octagonal shape. As also shown in FIG. 6, the total heat exchange element (30) includes one main heat exchange section (111) and two auxiliary heat exchange sections (112a, 112b).

The main heat exchange section (111) is located at the middle of the total heat exchange element (30) in the right-to-left direction in FIG. 6. When the total heat exchange element (30) is viewed in plan as shown in FIG. 6, the main heat exchange section (111) is a horizontally oriented rectangular portion. The auxiliary heat exchange sections (112a, 112b) are portions of the total heat exchange element (30) and are located on the sides of the main heat exchange section (111) in the right-to-left direction in FIG. 6. In the total heat exchange element (30), the auxiliary heat exchange sections (112a, 112b) are arranged on the respective sides of the main heat exchange section (111) in the right-to-left direction in FIG. 6. In the plan view of the total heat exchange element (30) as shown in FIG. 6, each of the auxiliary heat exchange sections (112a, 112b) is a trapezoidal portion.

The total heat exchange element (30) includes a plurality of first elements (120) and a plurality of second elements (150). The first elements (120) and the second elements (150) are alternately stacked in the total heat exchange element (30). Each of the first elements (120) forms a first air flow path (121). The first air flow path (121) allows the supply air to flow therethrough. Each of the second elements (150) forms a second air flow path (151). The second air flow path (151) allows the exhaust air to flow therethrough. In the total heat exchange element (30), the first air flow paths (121) and the second air flow paths (151) are alternately formed in a stacking direction of the first elements (120) and the second elements (150).

The total heat exchange element (30) has a first inflow port (122a), a first outflow port (122b), a second inflow port (152a), and a second outflow port (152b), which are formed at side surfaces thereof (surfaces parallel to the stacking direction of the first elements (120) and the second elements (150)). The first inflow port (122a) and the first outflow port (122b) are formed at the first element (120) and communicate with the first air flow path (121). The second inflow port (152a) and the second outflow port (152b) are formed at the second element (150) and communicate with the second air flow path (151).

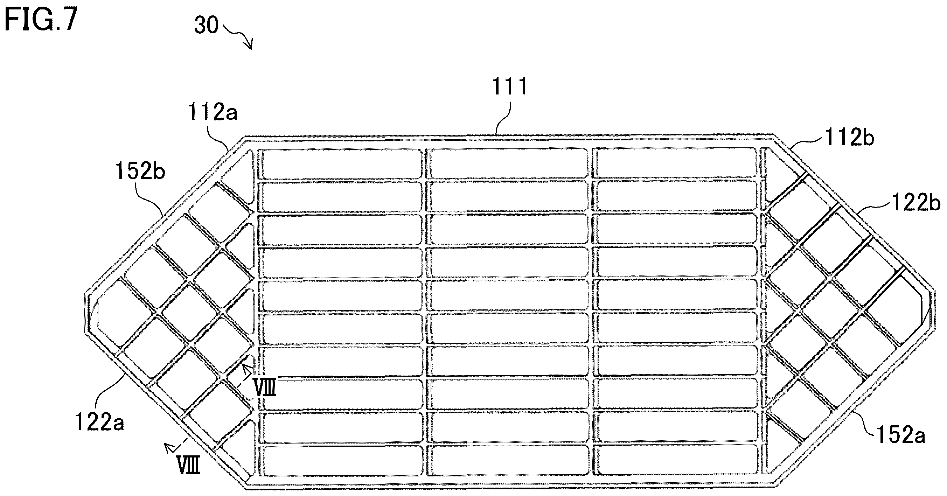

As also shown in FIGS. 6 and 7, the first inflow port (122a), the first outflow port (122b), the second inflow port (152a), and the second outflow port (152b) are formed at different side surfaces of the total heat exchange element (30). In the auxiliary heat exchange section (112a), which is one of auxiliary heat exchange sections of the total heat exchange element (30), the first inflow port (122a) is open at one side surface, and the second outflow port (152b) is open at another side surface. In the auxiliary heat exchange section (112b), which is the other auxiliary heat exchange section of the total heat exchange element (30), the first outflow port (122b) is open at one side surface, and the second inflow port (152a) is open at another side surface.

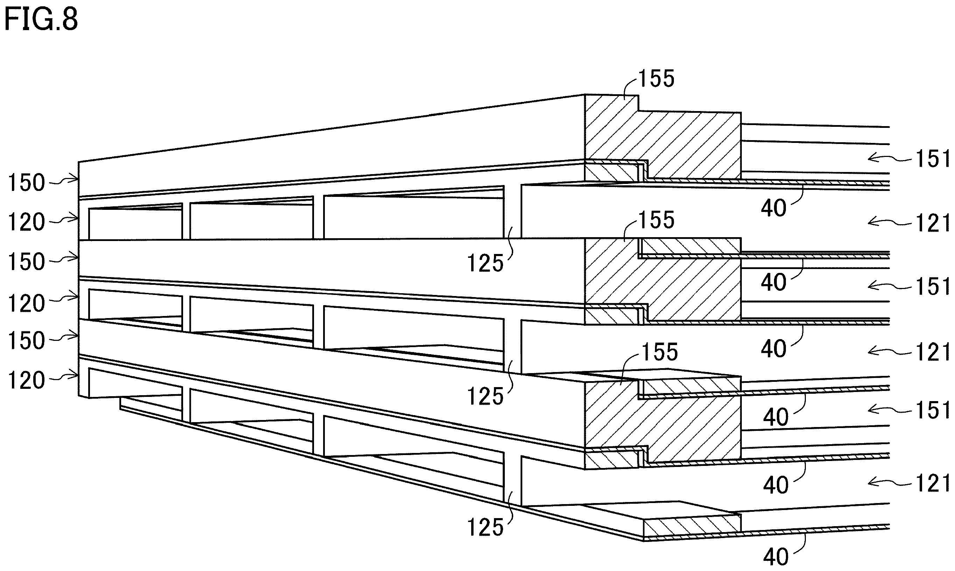

As shown in FIG. 8, the first element (120) includes a first frame (125) and the partitioning member (40) of the first embodiment, and the second element (150) includes a second frame (155) and the partitioning member (40) of the first embodiment.

Each of the first frame (125) and the second frame (155) is a flat, injection-molded resin member. The first frame (125) and the second frame (155) are spacing members that keep a distance between an adjacent pair of the partitioning members (40). Each of the first frame (125) and the second frame (155) is formed in a horizontally oriented octagonal shape in plan view (see FIG. 7). The frame (125, 155) has substantially the same outer shape as those of the end faces of the total heat exchange element (30) in plan view.

In the first element (120), the partitioning member (40) covers substantially the entirety of one surface (the lower surface in FIG. 8) of the first frame (125). In the first element (120), the partitioning member (40) is bonded to the first frame (125) with the moisture permeable membrane (42) facing the first frame (125). In the first element (120), the moisture permeable membrane (42) of the partitioning member (40) faces the first air flow path (121) formed by the first element (120).

In the second element (150), the partitioning member (40) covers substantially the entirety of one surface (the lower surface in FIG. 8) of the second frame (155). In the second element (150), the partitioning member (40) is bonded to the second frame (155) with the second surface (41b) of the porous base (41) facing the second frame (155). In the second element (150), the moisture permeable membrane (42) of the partitioning member (40) faces the first air flow path (121) formed by the first element (120) adjacent to the second element

(150).

### -Flow of Air and Heat Exchange Action-

In the total heat exchange element (30), as shown in FIG. 6, the outdoor air OA flows into the first inflow port (122a), and the room air RA flows into the second inflow port (152a). The outdoor air OA having flowed into the first inflow port (122a) flows in the first air flow path (121) as the supply air, sequentially passes through the auxiliary heat exchange section (112a) (i.e., one of the auxiliary heat exchange sections), the main heat exchange section (111), and the auxiliary heat exchange section (112b) (i.e., the other auxiliary heat exchange section), and is then supplied into the indoor space through the first outflow port (122b). The room air RA having flowed into the second inflow port (152a) flows in the second air flow path (151) as the exhaust air, sequentially passes through the auxiliary heat exchange section (112b) (i.e., the other auxiliary heat exchange section), the main heat exchange section (111), and the auxiliary heat exchange section (112a) (i.e., one of the auxiliary heat exchange section), and is then discharged to the outdoor space through the second outflow port (152b).

In each of the auxiliary heat exchange sections (112a, 112b) of the total heat exchange element (30), the supply air flowing in the first air flow path (121) and the exhaust air flowing in the second air flow path (151) flow in directions intersecting with each other. In the main heat exchange section (111) of the total heat exchange element (30), the supply air flowing in the first air flow path (121) and the exhaust air flowing in the second air flow path (151) flow in directions opposite to each other.

The total heat exchange element (30) causes exchange of sensible heat and latent heat (moisture) between the supply air flowing in the first air flow path (121) and the exhaust air flowing in the second air flow path (151). Of the supply air and the exhaust air in the total heat exchange element (30), one with a higher temperature transfers heat to the other with a lower temperature. Further, of the supply air and the exhaust air in the total heat exchange element (30), one with a higher humidity transfers moisture to the other with a lower humidity.

The total heat exchange element (30) of this embodiment causes exchange of sensible heat and latent heat between the supply air flowing in the first air flow path (121) and the exhaust air flowing in the second air flow path (151), mainly in the main heat exchange section (111). Thus, the total heat exchange element (30) of this embodiment is a counterflow heat exchanger.

### -Features of Fourth Embodiment-

In the total heat exchange element (30) of this embodiment, the functional material (46) producing the antifungal effect and the antibacterial effect is provided across the entirety of a portion, among the surfaces of each partitioning member (40), which faces the first air flow path (121). Thus, growth of bacteria and fungi can be reduced almost across the entirety of the portion, of the partitioning member (40) of the total heat exchange element (30), which is in contact with the supply air. The supply air passing through the total heat exchange element (30) can thus be kept clean.

### «Other Embodiments»

### -First Variation-

The structure of the partitioning member (40) for the total heat exchange element is not limited to the structure of the partitioning member (40) of the first embodiment.

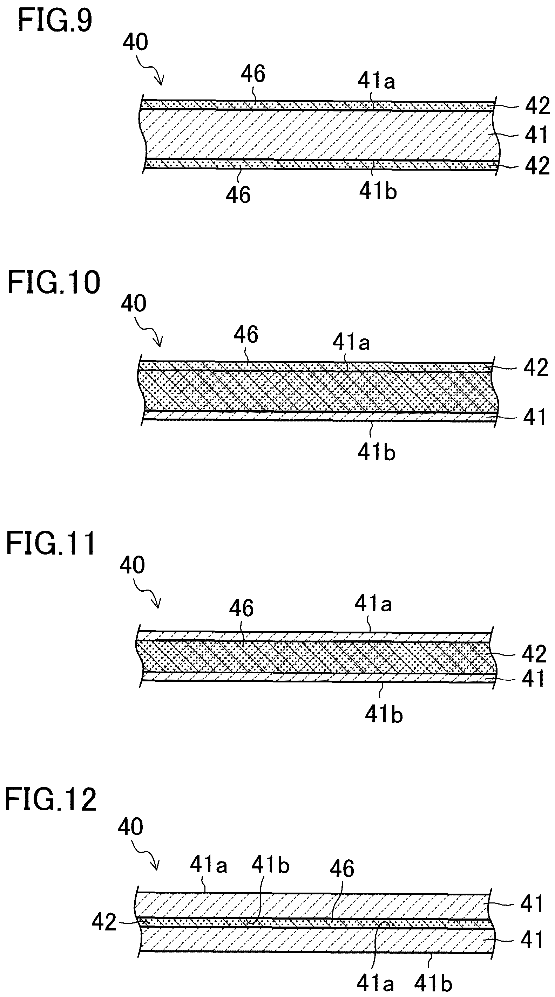

For example, a partitioning member (40) shown in FIG. 9 includes one porous base (41) and two moisture permeable membranes (42). In this partitioning member (40), one of the moisture permeable membranes (42) covers a first surface (41a) of the partitioning member (40), and the other moisture permeable membrane (42) covers a second surface (41b) of the partitioning member (40).

In a partitioning member (40) shown in FIG. 10, part of a moisture permeable membrane (42) enters a porous base (41). In manufacturing this partitioning member (40), an aqueous composition for forming the moisture permeable membrane (42) penetrates inside of the porous base (41). Thus, in this partitioning member (40), part of the moisture permeable membrane (42) covers the first surface (41a) of the porous base (41), and the remaining part enters the porous base (41).

In a partitioning member (40) shown in FIG. 11, the entirety of a moisture permeable membrane (42) is included in a porous base (41). In manufacturing this partitioning member (40), an aqueous composition for forming the moisture permeable membrane (42) is injected into the porous base (41). In this partitioning member (40), the moisture permeable membrane (42) is formed at a middle portion of the porous base (41) in a thickness direction thereof.

A partitioning member (40) shown in FIG. 12 includes two porous bases (41) and one moisture permeable membrane (42). In this partitioning member (40), the porous bases (41) are provided on the respective sides of the moisture permeable membrane (42) in a thickness direction thereof. Of the moisture permeable membrane (42) of this partitioning member (40), one surface is in contact with a first surface (41a) of one of the porous bases (41), and the other surface is in contact with a second surface (41b) of the other porous base (41).

### -Second Variation-

The structure of the partitioning member (40) for the total heat exchange element is not limited to the structure of the partitioning member (40) of the first embodiment.

The partitioning member (40) may include, in addition to the porous base (41) and the moisture permeable membrane (42), a functional membrane (45) containing the functional material (46). The moisture permeable membrane (42) of the partitioning member (40) of this variation contains no functional material (46). Here, an example where this variation is applied to the partitioning member (40) of the first embodiment will be described.

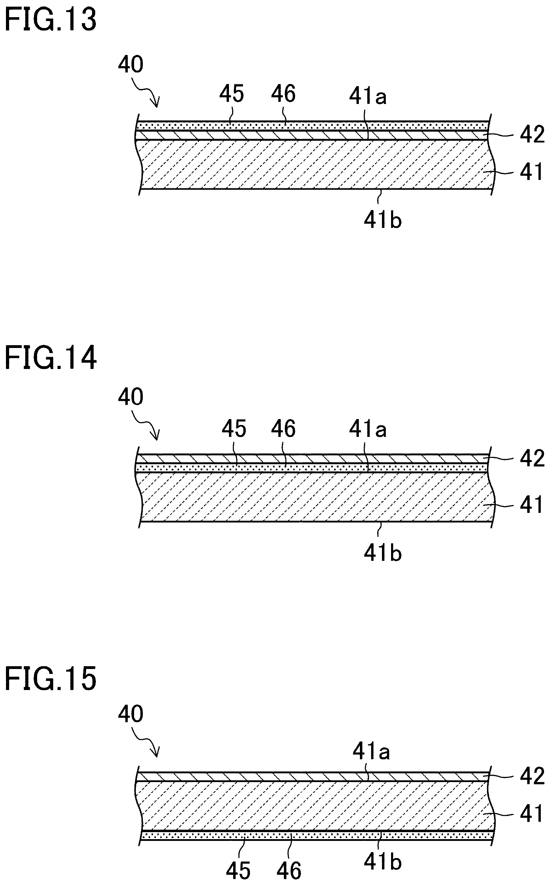

In the partitioning member (40) of this variation shown in FIG. 13, the functional membrane (45) is provided so as to cover the entire surface of the moisture permeable membrane (42). The functional membrane (45) is a coating containing the functional material (46). The functional membrane (45) has a thickness of 0.5 µm, for example. The functional membrane (45) is thinner than the moisture permeable membrane (42).

As shown in FIG. 14, the functional membrane (45) may be provided between the porous base (41) and the moisture permeable membrane (42). In this case, the functional membrane (45) is provided so as to cover the first surface (41a) of the porous base (41), and the moisture permeable membrane (42) is provided so as to cover the surface of the functional membrane (45).

As shown in FIG. 15, the functional membrane (45) may be provided so as to cover the second surface (41b) of the porous base (41). In this case, the functional membrane (45) covers the surface of the porous base (41) on the side opposite to the moisture permeable membrane (42).

### -Third Variation-

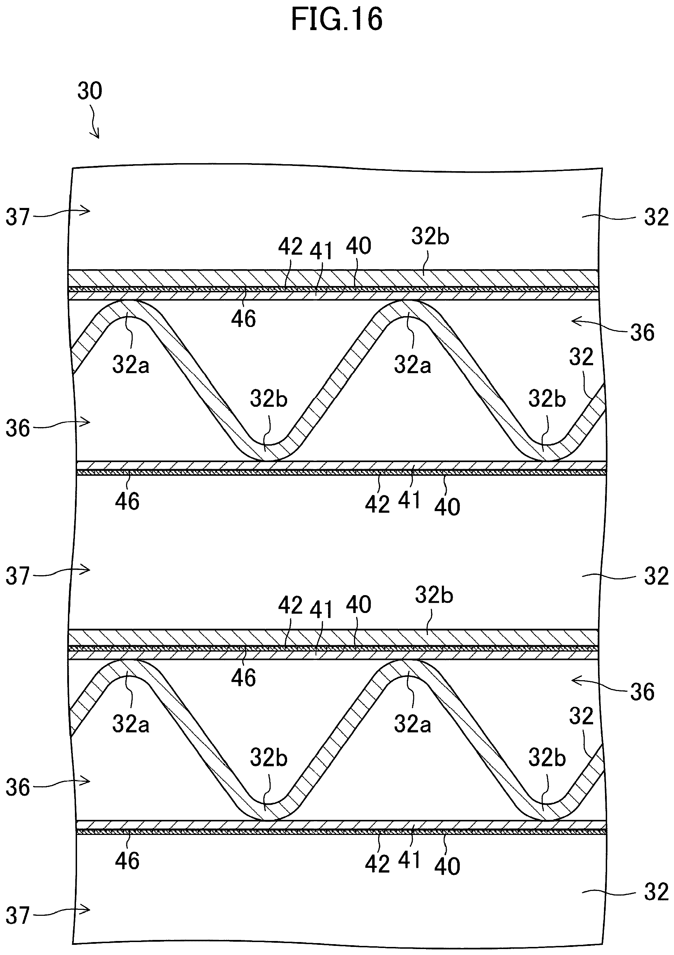

As shown in FIG. 16, in the total heat exchange elements (30) of the second and fourth embodiments, the moisture permeable membranes (42) of all the partitioning members (40) may face the second air flow paths (37, 151). FIG. 16 shows an example where this variation is applied to the total heat exchange element (30) of the second embodiment.

In the total heat exchange element (30) of this variation, the second surface (41b) of the porous base (41) of the partitioning member (40) faces the first air flow path (36, 121) in which the supply air flows, and the moisture permeable membrane (42) of the partitioning member (40) faces the second air flow path (37, 151) in which the exhaust air flows.

### -Fourth Variation-

The total heat exchange elements (30) of the second and fourth embodiments may have both of the partitioning members (40) including the moisture permeable membranes (42) facing the first air flow paths (36, 121) and the partitioning members (40) including the moisture permeable membranes (42) facing the second air flow paths (37, 151).

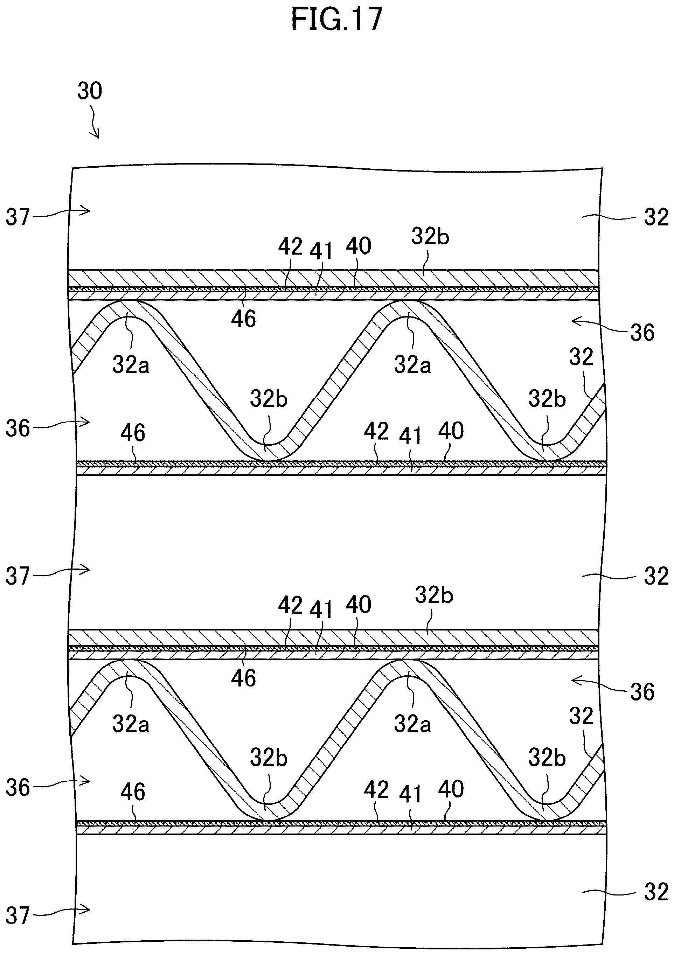

For example, in a total heat exchange element (30) shown in FIG. 17, the partitioning members (40) including the moisture permeable membranes (42) facing the first air flow paths (36, 121) and the partitioning members (40) including the moisture permeable membranes (42) facing the second air flow paths (37, 151) are alternately arranged in the stacking direction of the partitioning members (40) and the spacing members (32, 125, 155). FIG. 17 shows an example where this variation is applied to the total heat exchange element (30) of the second embodiment.

### -Fifth Variation-

The partitioning member (40) of each of the above-described embodiments and variations may contain zinc pyrithione (C₁₀H₈N₂O₂S₂Zn) as the functional material (46) producing the antifungal effect and the antibacterial effect. Zinc pyrithione as the functional material (46) is dispersed in the form of fine particles in the moisture permeable membrane (42) or the functional membrane (45).

In a case where the functional material (46) is contained in the form of fine particles in the moisture permeable membrane (42), the particle size (e.g., the major-axis diameter) of the fine particles as the functional material (46) is preferably smaller than the thickness of the moisture permeable membrane (42). If the particle size of the fine particles as the functional material (46) is smaller than the thickness of the moisture permeable membrane (42), the hermeticity of the moisture permeable membrane (42) is kept even in a case where the functional material (46) drops from the moisture permeable membrane (42) for some reason.

Further, the partitioning member (40) of each of the above-described embodiments and variations may contain a quaternary ammonium salt-based antiviral agent (e.g., 3-(triethoxysilyl)propyldimethyloctadecyl ammonium chloride) as the functional material (46) producing an antiviral effect.

The above-described embodiments and variations may be combined and replaced with each other without deteriorating intended functions of the present invention. The ordinal numbers such as "first," "second," "third," ..., in the description and claims are used to distinguish the terms to which these expressions are given, and do not limit the number and order of the terms.

### INDUSTRIAL APPLICABILITY

As described above, the present invention is useful for a partitioning member for a total heat exchange element, a total heat exchange element including the partitioning member, and a ventilation device including the total heat exchange element.

### DESCRIPTION OF REFERENCE CHARACTERS

- 10: Ventilation Device
- 32: Spacing Member
- 36: First Air Flow Path
- 37: Second Air Flow Path
- 40: Partitioning Member for Total Heat Exchange Element
- 41: Porous Base
- 41a: First Surface (of Porous Base)
- 42: Moisture Permeable Membrane
- 45: Functional Membrane
- 46: Functional Material
- 121: First Air Flow Path
- 125: First Frame (Spacing Member)
- 151: Second Air Flow Path
- 155: Second Frame (Spacing Member)

## Claims

1. A partitioning member for a total heat exchange element, comprising:
a sheet-shaped porous base (41);
a moisture permeable membrane (42) provided on the porous base (41); and
a functional material (46) producing at least one of an antifungal effect, an antibacterial effect, and an antiviral effect,
the moisture permeable membrane (42) containing the functional material (46),
the moisture permeable membrane (42) is provided so as to cover a surface of the porous base (41), and **characterized in that**
the surface of the porous base (41) covered with the moisture permeable membrane (42) is subjected to hydrophilic treatment allowing generation of a carboxy group, a hydroxy group, or a carbonyl group.

2. The partitioning member of claim 1, wherein
the functional material (46) is smaller than a thickness of the moisture permeable membrane (42).

3. A partitioning member for a total heat exchange element, comprising:
a sheet-shaped porous base (41);
a moisture permeable membrane (42) provided on the porous base (41); and
a functional membrane (45) containing a functional material (46) producing at least one of an antifungal effect, an antibacterial effect, and an antiviral effect and covering a surface of the porous base (41) or the moisture permeable membrane (42),
the moisture permeable membrane (42) is provided so as to cover a surface of the porous base (41), and **characterized in that**
the surface of the porous base (41) covered with the moisture permeable membrane (42) is subjected to hydrophilic treatment allowing generation of a carboxy group, a hydroxy group, or a carbonyl group.

4. The partitioning member of claim 3, wherein
the functional membrane (45) is thinner than the moisture permeable membrane (42).

5. The partitioning member of any one of claims 1 to 4, wherein
the functional material (46) is a substance containing pyrithione in a molecular structure.

6. A total heat exchange element comprising:
a plurality of partitioning members (40) of any one of claims 1 to 5; and
a spacing member (32, 125, 155) arranged between adjacent ones of the partitioning members (40) stacked, the spacing member (32, 125, 155) keeping a distance between the adjacent partitioning members (40),
a first air flow path (36, 121) and a second air flow path (37, 151) being alternately provided with an associated one of the partitioning members (40) interposed therebetween.

7. A ventilation device comprising:
the total heat exchange element (30) of claim 6,
supply air to be supplied from an outdoor space to an indoor space flowing in the first air flow path (36, 121) of the total heat exchange element (30), and exhaust air to be discharged from the indoor space to the outdoor space flowing in the second air flow path (37, 151) of the total heat exchange element (30).

## Patentansprüche

1. Trennelement für ein Gesamtwärmetauscherelement, umfassend:
eine blattförmige poröse Basis (41);
eine auf der porösen Basis (41) bereitgestellte feuchtigkeitsdurchlässige Membran (42); und
ein funktionelles Material (46), das mindestens einen von einem antimykotischen Effekt, einem antibakteriellen Effekt und einem antiviralen Effekt erzeugt,
wobei die feuchtigkeitsdurchlässige Membran (42) das funktionelle Material (46) enthält,
wobei die feuchtigkeitsdurchlässige Membran (42) so bereitgestellt ist, dass sie eine Oberfläche der porösen Basis (41) abdeckt und **dadurch gekennzeichnet ist, dass**
die Oberfläche der porösen Basis (41), die mit der feuchtigkeitsdurchlässigen Membran (42) abgedeckt ist, einer hydrophilen Behandlung unterzogen wird, die die Erzeugung einer Carboxygruppe, einer Hydroxygruppe oder einer Carbonylgruppe ermöglicht.

2. Trennelement nach Anspruch 1, wobei
das funktionelle Material (46) kleiner als eine Dicke der feuchtigkeitsdurchlässigen Membran (42) ist.

3. Trennelement für ein Gesamtwärmetauscherelement, umfassend:
eine blattförmige poröse Basis (41);
eine auf der porösen Basis (41) bereitgestellte feuchtigkeitsdurchlässige Membran (42); und
eine Funktionsmembran (45), die ein funktionelles Material (46) enthält, das mindestens einen von einem antimykotischen Effekt, einem antibakteriellen Effekt und einem antiviralen Effekt erzeugt, und die eine Oberfläche der porösen Basis (41) oder der feuchtigkeitsdurchlässigen Membran (42) abdeckt,
wobei die feuchtigkeitsdurchlässige Membran (42) so bereitgestellt ist, dass sie eine Oberfläche der porösen Basis (41) abdeckt und **dadurch gekennzeichnet ist, dass**
die Oberfläche der porösen Basis (41), die mit der feuchtigkeitsdurchlässigen Membran (42) abgedeckt ist, einer hydrophilen Behandlung unterzogen wird, die die Erzeugung einer Carboxygruppe, einer Hydroxygruppe oder einer Carbonylgruppe ermöglicht.

4. Trennelement nach Anspruch 3, wobei
die Funktionsmembran (45) dünner als die feuchtigkeitsdurchlässige Membran (42) ist.

5. Trennelement nach einem der Ansprüche 1 bis 4, wobei
das funktionelle Material (46) eine Substanz ist, die Pyrithion in einer molekularen Struktur enthält.

6. Gesamtwärmetauscherelement, umfassend:
eine Vielzahl von Trennelementen (40) nach einem der Ansprüche 1 bis 5; und
ein Abstandselement (32, 125, 155), das zwischen benachbarten Trennelementen (40), die gestapelt sind, angeordnet ist, wobei das Abstandselement (32, 125, 155) einen Abstand zwischen den benachbarten Trennelementen (40) einhält,
einen ersten Luftströmungsweg (36, 121) und einen zweiten Luftströmungsweg (37, 151), die abwechselnd bereitgestellt werden, wobei ein zugehöriges Trennelement (40) dazwischen eingefügt ist.

7. Belüftungsvorrichtung, umfassend:
das Gesamtwärmetauscherelement (30) nach Anspruch 6,
Zuluft, die aus einem Außenraum in einen Innenraum zuzuführen ist, die im ersten Luftströmungsweg (36, 121) des Gesamtwärmetauscherelements (30) strömt, und Abluft, die aus dem Innenraum in den Außenraum abzuführen ist, die im zweiten Luftströmungsweg (37, 151) des Gesamtwärmetauscherelements (30) strömt.

## Revendications

1. Organe de séparation pour un élément d'échange de chaleur totale, comprenant :
une base poreuse (41) en forme de feuille ;
une membrane perméable à l'humidité (42) prévue sur la base poreuse (41) ; et
un matériau fonctionnel (46) produisant au moins un d'un effet antifongique, d'un effet antibactérien et d'un effet antiviral,
la membrane perméable à l'humidité (42) contenant le matériau fonctionnel (46),
la membrane perméable à l'humidité (42) étant prévue de manière à recouvrir une surface de la base poreuse (41), et **caractérisé en ce que** la surface de la base poreuse (41) recouverte par la membrane perméable à l'humidité (42) est soumise à un traitement hydrophile permettant la génération d'un groupe carboxyle, d'un groupe hydroxyle ou d'un groupe carbonyle.

2. Organe de séparation selon la revendication 1, dans lequel
le matériau fonctionnel (46) est plus petit qu'une épaisseur de la membrane perméable à l'humidité (42).

3. Organe de séparation pour un élément d'échange de chaleur totale, comprenant :
une base poreuse (41) en forme de feuille ;
une membrane perméable à l'humidité (42) prévue sur la base poreuse (41) ; et
une membrane fonctionnelle (45) contenant un matériau fonctionnel (46) produisant au moins un d'un effet antifongique, d'un effet antibactérien et d'un effet antiviral et recouvrant une surface de la base poreuse (41) ou de la membrane perméable à l'humidité (42),
la membrane perméable à l'humidité (42) étant prévue de manière à recouvrir une surface de la base poreuse (41), et **caractérisé en ce que** la surface de la base poreuse (41) recouverte par la membrane perméable à l'humidité (42) est soumise à un traitement hydrophile permettant la génération d'un groupe carboxyle, d'un groupe hydroxyle ou d'un groupe carbonyle.

4. Organe de séparation selon la revendication 3, dans lequel
la membrane fonctionnelle (45) est plus mince que la membrane perméable à l'humidité (42).

5. Organe de séparation selon l'une quelconque des revendications 1 à 4, dans lequel
le matériau fonctionnel (46) est une substance contenant de la pyrithione dans une structure moléculaire.

6. Élément d'échange de chaleur totale comprenant :
une pluralité d'organes de séparation (40) selon l'une quelconque des revendications 1 à 5 ; et
un organe d'espacement (32, 125, 155) agencé entre des organes de séparation adjacents parmi les organes de séparation (40) empilés, l'organe d'espacement (32, 125, 155) maintenant une distance entre les organes de séparation (40) adjacents,
un premier trajet d'écoulement d'air (36, 121) et un deuxième trajet d'écoulement d'air (37, 151) étant prévus alternativement avec un organe de séparation associé parmi les organes de séparation (40) interposé entre ceux-ci.

7. Dispositif de ventilation comprenant :
l'élément d'échange de chaleur totale (30) selon la revendication 6,
de l'air de soufflage devant être fourni depuis un espace extérieur vers un espace intérieur s'écoulant dans le premier trajet d'écoulement d'air (36, 121) de l'élément d'échange de chaleur totale (30), et de l'air refoulé devant être évacué depuis l'espace intérieur vers l'espace extérieur s'écoulant dans le deuxième trajet d'écoulement d'air (37, 151) de l'élément d'échange de chaleur totale (30).
